# EUROPEAN PATENT APPLICATION

(11) **EP 3 214 740 A1**
(43) Date of publication of application: **06.09.2017**
(21) Application number: 15855029.3
(22) Date of filing: 27.10.2015
(51) Int. Cl.: H02K 41/02, H02K 41/03

(54) **LINEAR ACTUATOR**

(30) Priority: 29.10.2014 JP 2014220143
(71) Applicant: KYB Corporation, Tokyo 105-6111 (JP)
(72) Inventor: SATOU, Kousuke, Tokyo 105-6111 (JP)
(74) Representative: Grünecker Patent- und Rechtsanwälte PartG mbB
(86) International application number: PCT/JP2015/080282
(87) International publication number: WO 2016/068145

(57) **Abstract**

A linear actuator (100) includes: a first tube (10) provided with coils (41) placed there inside, the coils (41) being held by a yoke (40); a second tube (20) mounted on an outer circumference of the first tube (10); a rod (30) fixed to an end of the second tube (20) at one end; permanent magnets (31) held by the rod (30) while being lined up in an axial direction; and a joint portion (2) disposed at the outer side of the second tube (20), to be joined with an external device. The rod (30) has a non-magnetic portion (33) at the one end fixed to the second tube (20). The second tube (20) includes: an outer tube (21) formed along the outer circumference of the first tube (10); and a small diameter portion (22A) that is formed along an outer circumference of the non-magnetic portion (33) of the rod (30) and smaller in diameter than the outer tube (21). The joint portion (2) is disposed at the outer side of an end face of the small diameter portion (22A) of the second tube (20).

## Description

### TECHNICAL FIELD

The present invention relates to a linear actuator that is extended and contracted in an axial direction by an electromagnetic force.

### BACKGROUND ART

JP 2014-3824A discloses a linear actuator in which one tube and another tube are relatively displaced, in an axial direction, by an electromagnetic force that is generated between coils provided in one tube and permanent magnets provided in another tube.

### SUMMARY OF INVENTION

With the linear actuator described in JP 2014-3824A, another tube has a large outer diameter in a section where a joint portion is provided. Therefore, interference with another tube needs to be taken into consideration in designing an external device to be joined via the joint portion. This could possibly impose a limitation on the design of the external device.

The present invention aims to increase a degree of freedom in the design of an external device to be joined via a joint portion.

According to one aspect of the present invention, a linear actuator includes: a first tube provided with a plurality of coils placed there inside, the plurality of coils being held by a tubular yoke; a second tube mounted on an outer circumference of the first tube so as to be relatively displaceable in an axial direction; a rod fixed to an end of the second tube at one end so as to be movable in the yoke in the axial direction; a plurality of permanent magnets held by the rod while being lined up in the axial direction, the plurality of permanent magnets being arranged so as to oppose the plurality of coils; and a joint portion disposed at an outer side of the second tube so as to be joined with an external device. The rod has a non-magnetic portion at the one end fixed to the second tube. The second tube includes a large diameter portion that is formed along the outer circumference of the first tube and a small diameter portion that has a smaller diameter than that of the large diameter portion, the small diameter portion being formed along an outer circumference of the non-magnetic portion of the rod. The joint portion is disposed at an outer side surface of an end face of the small diameter portion of the second tube.

### BRIEF DESCRIPTION OF DRAWINGS

FIG. 1 is a cross-sectional view of a linear actuator in a contracted state according to an embodiment of the present invention, taken along an axial direction.
FIG. 2 is a cross-sectional view of the linear actuator in an extended state according to the embodiment of the present invention, taken along the axial direction.

### DESCRIPTION OF EMBODIMENTS

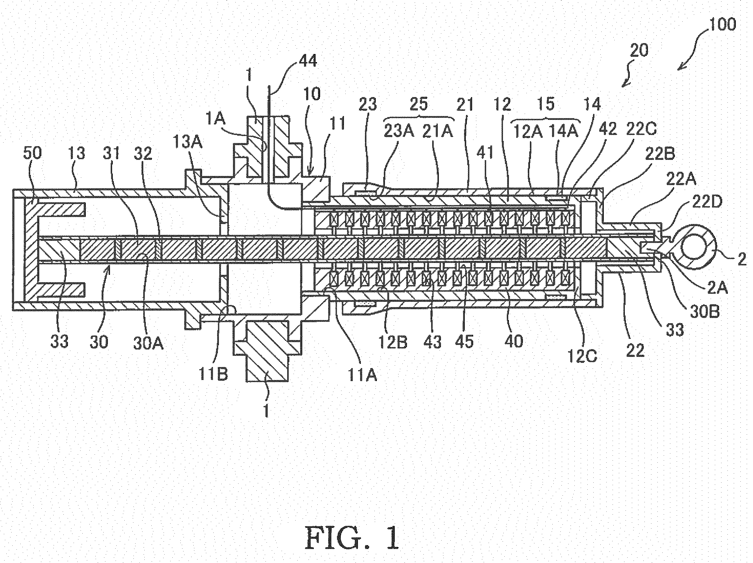

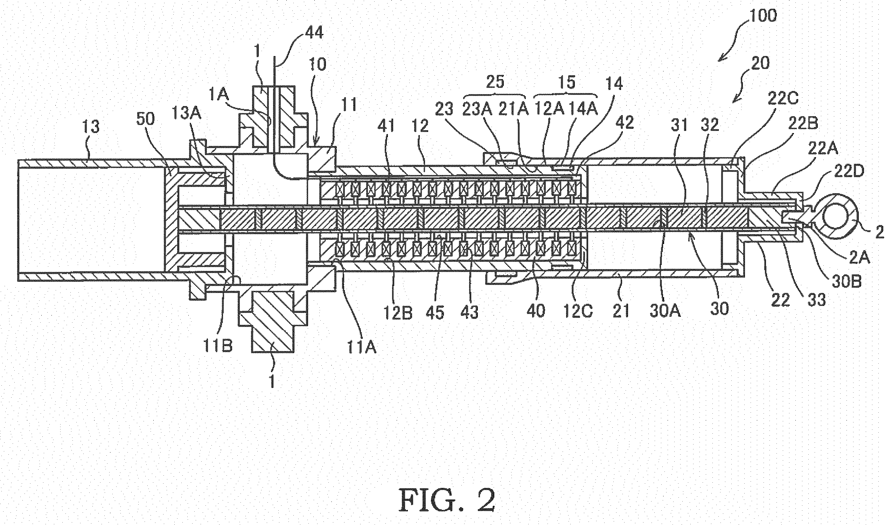

The following describes a linear actuator 100 according to an embodiment of the present invention with reference to FIGs. 1 and 2.

The linear actuator 100 includes a first tube 10, a second tube 20 that is slidably mounted on an outer circumference of the first tube 10, a rod 30 that is fixed to an end of the second tube 20 and holds permanent magnets 31, and a yoke 40 that is fit inside the first tube 10 and holds coils 41 opposing the permanent magnets 31.

In the linear actuator 100, a thrust (an electromagnetic force) that drives the rod 30 in an axial direction is generated in accordance with a current flowing through the coils 41, and the first tube 10 and the second tube 20 are relatively displaced according to the thrust. This causes the linear actuator 100 to extend and contract between a fully contracted position shown in FIG. 1 and a fully extended position shown in FIG. 2.

The first tube 10 includes a base portion 11 having a shape of a hollow cylinder, an inner tube 12 that is fixed to one end side of the base portion 11, and a guide tube 13 that is fixed to the other end side of the base portion 11.

The base portion 11 is a tubular member that is open at both ends. A pair of trunnion shafts 1 projecting in a radial direction is fixed to an outer circumference of the base portion 11. The pair of trunnion shafts 1 is rotatably supported by an external member (not shown). Accordingly, the linear actuator 100 is held in such a manner that it is rotatable with respect to the external member. One of the trunnion shafts 1 has a through hole 1A. Alternatively, both of the trunnion shafts 1 may have the through hole 1A. That is to say, at least one of the pair of trunnion shafts 1 has the through hole 1A.

One end of the inner tube 12 is fixedly fit on a first inner circumferential surface 11A of the base portion 11. That is to say, the inner tube 12 is supported by the base portion 11 at one end. Regarding the mechanism of coupling the inner tube 12 and the base portion 11 to each other, they are not limited to being fit to each other; they may be, for example, screwed to each other. Similarly, one end of the guide tube 13 is fixedly fit on a second inner circumferential surface 11B of the base portion 11. That is to say, the guide tube 13 is supported by the base portion 11 at one end. In the guide tube 13, its end fixed to the base portion 11 has a ring-shaped projected portion 13A that projects inward. Regarding the mechanism of coupling the guide tube 13 and the base portion 11 to each other, they are not limited to being fit to each other; they may be, for example, screwed to each other.

The second tube 20 includes an outer tube 21 having a shape of a hollow cylinder, and a cap 22. The outer tube 21 is open at both ends, and the inner tube 12 of the first tube 10 is slidably inserted into the outer tube 21 from one end side of the outer tube 21. The cap 22 is attached to the other end side of the outer tube 21.

The cap 22 includes a small diameter portion 22A, a flange portion 22B, and a bottom portion 22D. The small diameter portion 22A has a shape of a hollow cylinder, and has a diameter smaller than the outer diameter of the outer tube 21. The flange portion 22B has a shape of a circular ring, and stretches radially outward from one end of the small diameter portion 22A. The bottom portion 22D closes the other end of the small diameter portion 22A. The flange portion 22B has a projected portion 22C that has a shape of a hollow cylinder and that projects in a direction opposite to the small diameter portion 22A. The projected portion 22C has a male screw portion (not shown) at the outer circumferential side thereof. The other end of the outer tube 21 has a female screw portion (not shown), which corresponds to the male screw portion, at the inner circumferential side thereof. The outer tube 21 and the cap 22 are screwed to each other via these male screw portion and female screw portion. As a result, the other end of the second tube 20 is closed by the cap 22. Regarding the mechanism of coupling the outer tube 21 and the cap 22 to each other, they are not limited to being screwed to each other; they may be, for example, fit to each other. The outer tube 21, which is larger in outer diameter than the small diameter portion 22A, serves as a large diameter portion. The flange portion 22B for interconnecting the small diameter portion 22A and the outer tube 21 serves as a connection portion.

A joint member 2 serving as a joint portion, with which an external device (not shown) is joined, is fixed to an outer side surface of the bottom portion 22D of the cap 22. As stated earlier, the second tube 20 includes the small diameter portion 22A that has a diameter smaller than the outer diameter of the outer tube 21 and that is located between the bottom portion 22D of the cap 22 and the outer tube 21. That is to say, the joint member 2 is disposed at the outer side of an end face of the small diameter portion 22A. This can prevent interference between the second tube 20 and the external device that is joined via the joint member 2. The outer diameter and the axial length of the small diameter portion 22A are set as appropriate in accordance with, for example, the shape of the external device.

The linear actuator 100 includes a first linear guide portion 15 and a second linear guide portion 25 for supporting the first tube 10 and the second tube 20 in such a manner that the first tube 10 and the second tube 20 can be relatively displaced in the axial direction.

A ring-shaped first bearing 14 is mounted on an outer circumference of the free end side of the inner tube 12. A bearing surface (an outer circumferential surface) 14A of the first bearing 14 is in sliding contact with an inner circumferential surface 21A of the outer tube 21. The first linear guide portion 15 is composed of an outer circumferential surface 12A of the inner tube 12 and the bearing surface 14A of the first bearing 14.

A ring-shaped second bearing 23 is mounted on an inner circumference of the open end side of the outer tube 21. A bearing surface (an inner circumferential surface) 23A of the second bearing 23 is in sliding contact with the outer circumferential surface 12A of the inner tube 12. The second linear guide portion 25 is composed of the inner circumferential surface 21A of the outer tube 21 and the bearing surface 23A of the second bearing 23.

During the extension and contraction of the linear actuator 100, in the first linear guide portion 15, the bearing surface 14A of the first bearing 14 is in sliding contact with the inner circumferential surface 21A of the outer tube 21. On the other hand, in the second linear guide portion 25, the bearing surface 23A of the second bearing 23 is in sliding contact with the outer circumferential surface 12A of the inner tube 12. Accordingly, the inner tube 12 and the outer tube 21 smoothly slide on each other. The outer circumferential surface 12A of the inner tube 12 and the inner circumferential surface 21A of the outer tube 21 oppose each other, with no gap therebetween, via the first bearing 14 and the second bearing 23.

The rod 30 is a pole-like member with a hollow portion 30A. One end of the rod 30 is fixed to the inner side of the cap 22 that constitutes an end of the second tube 20. Further, the other end of the rod 30 is fixed to a rod guide 50 that is slidably placed inside the guide tube 13. As the rod guide 50 is mounted on the other end of the rod 30, the guide tube 13 and the rod 30 are reliably rendered coaxial. This prevents the end of the rod 30 from swinging in the radial direction during the extension and contraction of the linear actuator 100.

The plurality of permanent magnets 31 are held in the hollow portion 30A of the rod 30 while being lined up in the axial direction. Each permanent magnet 31 has a columnar shape, and is magnetized in such a manner that its N pole and S pole are positioned in the axial direction. Neighboring permanent magnets 31 are placed in such a manner that their ends of the same polarity oppose each other. Furthermore, a yoke 32 is provided between neighboring permanent magnets 31. Note that the yokes 32 need not necessarily be provided, and neighboring permanent magnets 31 may be in contact with each other. Moreover, non-magnetic elements 33 serving as non-magnetic portions are disposed at both ends inside the hollow portion 30A. That is to say, the hollow portion 30A is fixed to the cap 22 and the rod guide 50 via the non-magnetic elements 33.

In a section where the rod 30 is fixed to the cap 22, the rod 30 is fixed by a screw portion 2A of the joint member 2 in the state where an end face 30B of the rod 30 is in tight surface contact with an inner surface of the bottom portion 22D of the cap 22. Furthermore, a part of the rod 30 in which one of the non-magnetic elements 33 is disposed is out of contact with the small diameter portion 22A of the cap 22, that is to say, distanced from the small diameter portion 22A of the cap 22 by a predetermined gap. As such, the position of the rod 30 is determined only by the surface contact between the end face 30B of the rod 30 and the bottom portion 22D of the cap 22. Therefore, centering of the rod 30 is easily performed. The rod 30 is not limited to being fixed to the cap 22 by the screw portion 2A of the joint member 2; it may be fixed to the cap 22 by a coupling member that is different from the joint member 2. In this case, the joint member 2 and the cap 22 may be formed integrally.

The yoke 40 having a shape of a hollow cylinder is mounted on an inner circumferential surface 12B of the inner tube 12. At the free end side of the inner tube 12, a restriction portion 12C is provided on the inner circumferential surface 12B. The restriction portion 12C has a shape of a circular ring, and projects radially inward. The yoke 40 is inserted into the inner tube 12 to the point where it is in contact with the restriction portion 12C. As shown in FIG. 1, the restriction portion 12C opposes the flange portion 22B of the cap 22 in the axial direction. Therefore, when the first tube 10 and the second tube 20 are at the fully contracted position of the linear actuator 100, a tip of the projected portion 22C that projects from the flange portion 22B is in contact with a surface of the restriction portion 12C opposite to a surface of the restriction portion 12C that is in contact with the yoke 40. The restriction portion 12C opposing the flange portion 22B serves as an opposing portion.

The yoke 40 has an insertion hole 45 through which the rod 30 is inserted in the axial direction. An inner circumferential surface of the yoke 40 has ring-shaped recesses 43 that are recessed toward an outer circumference of the yoke 40. The plurality of coils 41 are fixed inside the ring-shaped recesses 43, and are lined up in the axial direction so as to oppose the permanent magnets 31.

The outer circumference of the yoke 40 has grooves 42 each running in a direction of an axis line. Wires 44 from the plurality of coils 41 are inserted into the grooves 42. Although not illustrated, the grooves 42 are provided at three or more positions with a circumferential interval therebetween. Instead of being provided on an outer circumferential surface of the yoke 40, the grooves 42 may be provided on the inner circumferential surface 12B of the inner tube 12. The grooves 42 may be provided on both of the outer circumferential surface of the yoke 40 and the inner circumferential surface 12B of the inner tube 12.

The wires 44 from the plurality of coils 41 are drawn to the outside via the grooves 42 and the through hole 1A provided in the trunnion shafts 1. Once the wires 44 have been drawn to the outside, it is connected to a controller (not shown). The controller controls the thrust generated by the linear actuator 100 and the directions of the generated thrust (the extension and contraction directions) by controlling the intensity and phase of the current supplied to the coils 41.

A description is now given of the operation of the linear actuator 100.

In the linear actuator 100, when the coils 41 are supplied with a current of a predetermined direction, a thrust that drives the rod 30 in one direction (a rightward direction in FIG. 1) is generated. Along with the driving of the rod 30 in one direction, the linear actuator 100 extends as the outer tube 21 of the second tube 20 moves while sliding with respect to the inner tube 12 of the first tube 10.

As shown in FIG. 2, when the linear actuator 100 has extended to the fully extended position, the rod guide 50 is in contact with a side surface of the projected portion 13A of the guide tube 13, thereby restricting a further movement of the rod 30. As such, the rod guide 50 functions as a stopper.

On the other hand, when the coils 41 are supplied with a current with a phase opposite to a phase of the current supplied during the extension, a thrust that drives the rod 30 in the other direction (a leftward direction in FIG. 2) is generated. Along with the driving of the rod 30 in the other direction, the linear actuator 100 contracts as the outer tube 21 of the second tube 20 moves while sliding with respect to the inner tube 12 of the first tube 10.

As shown in FIG. 1, when the linear actuator 100 has contracted to the fully contracted position, the tip of the projected portion 22C that projects from the flange portion 22B of the cap 22 is in contact with the restriction portion 12C of the inner tube 12, thereby restricting a further movement of the rod 30. As such, the flange portion 22B and the restriction portion 12C function as stoppers. Regarding the specific configurations of the stoppers, the projected portion 22C that projects from the flange portion 22B may be replaced with a projected portion that projects from the restriction portion 12C toward the flange portion 22B, or both of the flange portion 22B and the restriction portion 12C may have a projected portion. The stoppers may be configured in any manner as long as the movement of the rod 30 is restricted by the flange portion 22B and the restriction portion 12C. For example, a buffer member may be provided on a surface of the flange portion 22B or the restriction portion 12C to lessen contact-induced shock.

Furthermore, as shown in FIG. 1, when the linear actuator 100 is at the fully contracted position, a part of the permanent magnets 31 extends out from the coils 41 fixed to the yoke 40 toward the cap 22. With the part of the permanent magnets 31 thus positioned beyond the coils 41 in the extension direction of the linear actuator 100 at the fully contracted position, the thrust (the electromagnetic force) for driving the rod 30 is easily generated in causing the linear actuator 100 to extend from the fully contracted position.

The foregoing embodiment achieves the following effects.

In the present embodiment, the second tube 20 includes the small diameter portion 22A that is smaller in diameter than the outer tube 21, and the joint member 2 with which the external device is joined is disposed at the outer side of the end face of the small diameter portion 22A. This prevents interference between the second tube 20 and the external device that is joined via the joint member 2. As a result, a degree of freedom in the design of the external device can be increased.

Furthermore, the fully contracted positions of the first tube 10 and the second tube 20 are defined by the contact between the restriction portion 12C and the flange portion 22B. As such, the flange portion 22B and the restriction portion 12C, which come in proximity to each other due to the formation of the small diameter portion 22A, can be efficiently used as members that define the fully contracted position of the linear actuator 100. Furthermore, as the restriction portion 12C and the flange portion 22B are formed at positions where they are not exposed to the outside, it is possible to suppress accumulation of foreign substances and the like at the site of contact between the restriction portion 12C and the flange portion 22B. As a result, the fully contracted position of the linear actuator 100 can be stabilized.

Furthermore, while the restriction portion 12C and the flange portion 22B are in contact with each other, a part of the permanent magnets 31 projects farther toward the small diameter portion 22A than the coils 41 do. That is to say, when the linear actuator 100 is at the fully contracted position, the part of the permanent magnets 31 in the rod 30 is positioned beyond the coils 41 fixed to the yoke 40 in the extension direction of the linear actuator 100. Therefore, the thrust (the electromagnetic force) for driving the rod 30 is easily generated in causing the linear actuator 100 to extend from the fully contracted position. As a result, responsiveness can be improved.

Furthermore, a gap is provided between an outer circumference of the rod 30 and an inner circumference of the small diameter portion 22A of the second tube 20. The rod 30 is fixed to the second tube 20 in the state where the end face 30B of the rod 30 is in surface contact with the inner side of the end face of the small diameter portion 22A. As such, the position of the rod 30 is determined only by the surface contact between the end face 30B of the rod 30 and the end face of the small diameter portion 22A. Therefore, centering of the rod 30 can be easily performed.

Embodiments of the present invention were described above, but the above embodiments are merely examples of applications of the present invention, and the technical scope of the present invention is not limited to the specific constitutions of the above embodiments.

This application claims priority based on Japanese Patent Application No. 2014-220143 filed with the Japan Patent Office on October 29, 2014, the entire contents of which are incorporated into this specification.

## Claims

1. A linear actuator, comprising:
a first tube provided with a plurality of coils placed there inside, the plurality of coils being held by a tubular yoke;
a second tube mounted on an outer circumference of the first tube so as to be relatively displaceable in an axial direction;
a rod fixed to an end of the second tube at one end so as to be movable in the yoke in the axial direction;
a plurality of permanent magnets held by the rod while being lined up in the axial direction, the plurality of permanent magnets being arranged so as to oppose the plurality of coils; and
a joint portion disposed at an outer side of the second tube so as to be joined with an external device,
wherein
the rod has a non-magnetic portion at the one end fixed to the second tube,
the second tube includes a large diameter portion that is formed along the outer circumference of the first tube and a small diameter portion that has a smaller diameter than that of the large diameter portion, the small diameter portion being formed along an outer circumference of the non-magnetic portion of the rod, and
the joint portion is disposed at an outer side surface of an end face of the small diameter portion of the second tube.

2. The linear actuator according to claim 1,
wherein
the second tube includes a connection portion that interconnects the large diameter portion and the small diameter portion,
the first tube includes an opposing portion opposing the connection portion, and
a fully contracted position for the first tube and the second tube is defined by contact between the connection portion and the opposing portion.

3. The linear actuator according to claim 2,
wherein
when the connection portion and the opposing portion are in contact with each other, a part of the permanent magnets extends out from the coils toward the small diameter portion.

4. The linear actuator according to claim 1,
wherein
a gap is provided between an outer circumference of the rod and an inner circumference of the small diameter portion of the second tube, and
the rod is fixed to the second tube in a state where an end face of the rod is in surface contact with an inner side surface of the end face of the small diameter portion.
